# EUROPÄISCHE PATENTSCHRIFT

(11) **EP 2 433 032 B1**
(45) Veröffentlichungstag und Bekanntmachung des Hinweises auf die Patenterteilung: **09.07.2014**
(21) Anmeldenummer: 10727329.4
(22) Anmeldetag: 20.05.2010
(51) Int. Cl.: F16H 55/06

(54) **ZAHNRAD**
GEAR WHEEL
ROUE DENTÉE

(30) Priorität: 20.05.2009 AT 7922009
(43) Veröffentlichungstag der Anmeldung: 28.03.2012
(73) Patentinhaber: Miba Sinter Austria GmbH, 4663 Laakirchen (AT)
(72) Erfinder: MITTERMAIR, Mario, A-4843 Ampflwang (AT); SPITALER, Robert, A-4654 Bad Wimsbach/Neydharting (AT); MÜLLER, Alexander, A-4813 Altmünster (AT); PAMMINGER, Helmut, A-4840 Vöcklabruck (AT)
(74) Vertreter: Burger, Hannes
(86) Internationale Anmeldenummer: PCT/AT2010/000177
(87) Internationale Veröffentlichungsnummer: WO 2010/132914

(56) Entgegenhaltungen:
- EP-A1- 1 600 667
- EP-A1- 1 832 370
- EP-A1- 2 012 014
- EP-A2- 1 271 001
- EP-A2- 1 839 780
- DE-A1- 10 135 385
- DE-A1-102005 027 049
- US-A1- 2009 099 675

## Beschreibung

Die Erfindung betrifft ein Stimzahnrad mit einem Zahnradkörper aus einem Sinterwerkstoff, der einen Umfang aufweist, über den verteilt in radialer Richtung vorstehend Zähne angeordnet sind, und der in axialer Richtung von zwei Endflächen begrenzt ist, wobei auf zumindest einer Endfläche im Bereich der Zähne und/oder in radialer Richtung unterhalb der Zähne zumindest ein Formelement in Form einer Ausnehmung oder einer Erhebung angeordnet ist, sowie einen Zahnradantrieb mit zumindest zwei miteinander kämmenden Zahnrädern oder mit zumindest zwei Zahnrädern die über ein Zugmittel miteinander wirkverbunden sind.

Zahnräder aus Sinterwerkstoffen haben gegenüber Zahnrädern aus Vollwerkstoffen den Vorteil, dass sie auch in komplexeren Geometrien einfacher gefertigt werden können und somit kostengünstiger herstellbar sind. Aus diesem Grund werden Sinterzahnräder z.B. in modernen Getrieben vermehrt eingesetzt. Naturgemäß haben jedoch derartige Sinterwerkstoffe gegenüber Vollmaterialien den Nachteil, dass die einzelnen Sinterpartikel, also das Sinterpulver, mit vertretbarem Aufwand nur auf eine bestimmte Dichte verdichtet werden können, die normalerweise unterhalb der Volldichte des Materials liegt. Damit einhergehend ist, dass die mechanische Festigkeit im Vergleich zu Zahnrädern aus Vollmaterial geringer ist. Um dies zu vermeiden ist es heute üblich, dass die Zähne von Stirnzahnrädern einer Nachbehandlung unterzogen werden, beispielsweise einer nachträglichen Verdichtung durch Rollverfahren, etc., wobei je nach Festigkeitsanforderungen die Zahnköpfe und/oder die Zahnflanken und/oder die Zahnfußbereiche zusätzlich verdichtet werden. Auch Oberflächenbehandlungen, wie zum Beispiel das Härten, das Anlassen, etc., sind übliche Verfahren. Bei der mechanischen nachträglichen Verdichtung erfolgt die Beaufschlagung des Sinterzahnrades durch Druckbeanspruchung in radialer Richtung.

Die gattungsgemäße DE 101 35 385 A1 beschreibt ein verzahntes Teil, umfassend Zähne aus einem ersten Material, wobei die Zähne zumindest einen Kopfbereich, zwei Stirnseiten und zwei Flanken umfassen, der jeweilige Zahn einen nichtverschwindenden Schrägungswinkel aufweist, und mindestens ein Zahn einen oder mehrere Raumbereiche aus zweitem Material umfasst, wobei das zweite Material sich vom ersten Material unterscheidet, wobei der eine oder die mehreren Raumbereiche die Kopffläche des Zahnes umfassen, berühren oder als Begrenzung aufweisen, und wobei die Tiefe des Raumbereiches oder der Raumbereiche von der Mitte des Zahnes aus in Flankenrichtung zu den beiden Stirnseiten hin zunimmt.

Die EP 1 271 001 A2 beschreibt ein geräuschgedämpftes Zahnrad mit einer achsparallel durch seinen Zahn sich erstreckenden, abgerundet berandeten Durchbrechung in der Umgebung der radialen Höhe des Eingriffspunktes eines davon getriebenen Zahnes, wobei das Zahnrad ein Kunststoff-Spritzgussteil ist, das mit gegenüber einer Normverzahnung verlängerten Zähnen ausgestattet ist, in denen jeweils ein Durchbruch in Form eines im Querschnitt etwa wenigstens annähernd runden Loches freigespart ist.

Aus der US 2009/0099675 A1 ist ein Kraftübertragungssystem bekannt bei dem zumindest ein Teil eine Mehrzahl an Mikrodefekten aufweist. Die Oberfläche weist verteilt Oberflächenungenauigkeiten auf, wodurch zu einer ersten Resonanzfrequenz des Teils eine zweite Resonanzfrequenz erzeugt wird, die im Wesentlichen außerhalb des Frequenzbereiches der ersten Resonanzfrequenz liegt. Die Zähne können dabei eine schiefe Geometrie aufweisen.

Aus der DE 10 2005 027 049 A1 ist Verfahren zur Herstellung einer Verzahnung aus verdichtetem Sintermaterial bekannt, wobei eine vorverdichtete Zahnvorform zumindest in einem Bereich mittels iterativ ermittelter Daten auf ihre Endform verdichtet wird, und eine Rauigkeit in dem Bereich gegenüber der Vorform um zumindest 400 % verbessert wird, wobei eine Oberflächenhärte von zumindest 130 HB eingestellt wird. Die Stirnfläche der Zähne kann nach innen gewölbt ausgeführt sein. Diese Vertiefung dient dazu, das Wachsen der durch die Oberflächenverdichtung erzielten Verdrängung von Sintermaterial und damit einhergehendem Wachsen des Zahnes in die Höhe und/oder Breite zumindest zu minimieren bzw. auszugleichen.

Ausgehend vom Stand der Technik ist es die Aufgabe der Erfindung, das Tragbild eines Stirnzahnrades aus einem Sinterwerkstoff zu verbessern.

Unter Tragbild des Stirnzahnrades werden im Sinne der Erfindung einerseits die mechanische Festigkeit derartiger Stirnzahnräder und andererseits auch die Geräuschentwicklung beim Betrieb des Stirnzahnrades verstanden.

Diese Aufgabe der Erfindung wird einerseits durch das Stimzahnrad gelöst, bei dem das Formelement oder die Formelemente die Kontur der Verzahnung nachformen, sowie durch den eingangs genannten Zahnradantrieb, bei dem zumindest eines der Zahnräder entsprechend der Erfindung ausgebildet ist.

Die Erfindung zielt also auf eine spezielle Formgebung der bei Stirnzahnrädern nach dem Stand der Technik üblicherweise als Planflächen ausgebildeten Endflächen des Stimzahnrades ab.

Üblicherweise wurden diese Endflächen in der Zahnradbearbeitung zur Erhöhung der mechanischen Festigkeit von Sinterzahnrädern bislang nicht beachtet, da die Beanspruchung der Zahnräder normalerweise in radialer bzw. tangentialer Richtung erfolgt. Es hat sich jedoch überraschend herausgestellt, dass mit den erfindungsgemäßen Stirnzahnrädern höhere Zahnfußfestigkeiten erreicht werden können. Normalerweise gehen Risse im Bereich des Zahnfußes von der so genannten 30 ° Tangente aus. Eine Verstärkung dieses Bereiches bringt Vorteile bei der an die Gestaltung der Endflächen anschließenden Wärmebehandlung. Es kann durch diese Formelemente eine Änderung des Steifigkeitsverhaltens des Zahnradkörpers, insbesondere der Verzahnung, bewirkt werden, wodurch einerseits die Geräuschbildung, beispielsweise bei kämmenden Zahnrädern, und andererseits das mechanische Tragbild, das heißt die mechanische Festigkeit des Zahnradkörpers, insbesondere im Bereich der Verzahnung verbessert werden. Ebenso konnte eine verbesserte Beölung des Stirnzahnrades beobachtet werden. Weiters ist es dabei von Vorteil, dass die Formelemente auf den jeweiligen Sinterwerkstoff abgestimmt werden können. Durch die Ausbildung von Negativformen, also von vertieften Bereichen, in den Endflächen kann das Tragbild insofern verbessert werden, als der Randbereich der Verzahnung "weicher" gestaltet werden kann, sodass sich in der Folge bei Belastung die Kanten besser verformen können und damit Kantenträger besser vermieden werden können.

Nach einer Ausführungsvariante ist vorgesehen, dass das zumindest eine Formelement verdichtet ausgebildet ist.

Nach einer anderen Ausführungsvariante ist vorgesehen, dass zusätzlich an zumindest einer der Endflächen zumindest ein Formelement in Form eines verdichteten Bereichs angeordnet ist.

Gemäß einer Ausführungsvariante ist vorgesehen, dass sich das oder die Formelement(e) in radialer Richtung maximal bis in einen Bereich unterhalb des Fußkreises der Zähne erstreckt/erstrecken von 35 % des maximalen Durchmessers des Zahnradkörpers, also jenes Durchmessers zwischen einander gegenüberliegenden Zahnköpfen. Es konnte damit eine Verbesserung des Tragbildes erreicht werden, indem die Randbereiche weicher ausgestaltet werden können und sich damit bei Belastung besser verformen.

In Abwandlungen dazu ist vorgesehen, dass sich das oder die Formelement(e) in radialer Richtung maximal bis in einen Bereich unterhalb des Fußkreises der Zähne erstreckt/erstrecken von 30 % des maximalen Durchmessers des Zahnradkörpers, bzw. dass sich das oder die Formelement(e) in radialer Richtung maximal bis in einen Bereich unterhalb des Fußkreises der Zähne erstreckt/erstrecken von 25 % des maximalen Durchmessers des Zahnradkörpers.

Es sei jedoch angemerkt, dass es im Rahmen der Erfindung auch möglich ist, dass sich das oder die Formelement(e) in radialer Richtung bis in den Nabenbereich erstrecken.

Das Formelement kann sich entlang der Außenkontur der Endfläche erstrecken. Beispielsweise ist es also möglich, ein einziges Formelement an der Endfläche bzw. den Endflächen auszubilden, welches auch der Außenkontur der Verzahnung erfolgt. Durch diese symmetrische Anordnung des Formelementes konnten Verbesserungen des Tragbildes des Stirnzahnrades sowohl im Zahnkopf als auch im Zahnfuß und in den Zahnflankenbereich beobachtet werden.

Insbesondere von Vorteil ist es, wenn das Formelement sich zumindest über 5 % des Flächenanteils der Zähne an der Endfläche erstreckt. Ein geringerer Flächenanteil des Formelementes an der Gesamtfläche der Zähne bewirkt zwar ebenfalls eine Verbesserung des Tragbildes, jedoch konnte ab einem Flächenanteil von 5 % ein deutlicher Anstieg in der mechanischen Festigkeit und/oder eine Verringerung des Geräuschpegels beobachtet werden.

In besonderen Ausführungsvarianten dazu ist vorgesehen, dass sich das Formelement zumindest über 10 % des Flächenanteils der Zähne an der Endfläche erstreckt bzw. dass sich das Formelement sich zumindest über 30 % des Flächenanteils der Zähne an der Endfläche erstreckt.

Die Formelemente können sich beginnend zumindest annähernd vom Zahnkopfkreis in radialer Richtung nach innen erstrecken, wodurch insbesondere bei positiven Formelementen eine bessere Beölung der Verzahnung erreicht werden kann und bei Negativformelementen, also Vertiefungen, eine weitere Reduktion der Kantenträgerbildung erreicht werden konnte. Auch in der Ausführung mit den verdichteten Bereichen im Bereich des Zahnes, das heißt den Seitenflächen der Verzahnung, konnte eine entsprechende Verbesserung der Festigkeit festgestellt werden.

Es ist aber andererseits auch möglich, dass sich die Formelemente beginnend zumindest annähernd vom Zahnfußkreis in radialer Richtung nach innen erstrecken, also entweder die Zähne selbst keine Formelemente aufweisen oder diese Formelementen unterhalb des Zahnfußkreises zusätzlich zu den Formelementen im Bereich der Endflächen der Zähne angeordnet sind. Insbesondere in der Ausbildung der Formelemente als Erhebungen konnte eine weitere Verbesserung der Beölung der Verzahnung erreicht werden, wenn unterhalb des Zahnfußkreisses derartige Formelemente angeordnet sind.

Gemäß einer Ausführungsvariante ist vorgesehen, dass sich die Formelemente zusätzlich an den Zahnköpfen und/oder Zahnfüßen in axialer Richtung erstrecken, also sich diese Formelemente nach einer Richtungsänderung im Bereich der Verzahnung, das heißt der Zähne, fortpflanzen bzw. können bei dieser Ausführungsvariante die Formelemente im Bereich der Zähne soweit fortgesetzt werden, dass Formelemente an einander gegenüberliegenden Bereichen der einander gegenüberliegenden Endflächen des Stirnzahnrades durch die Formelemente im Zahnbereich selbst miteinander verbunden werden. Beispielsweise kann durch die Ausbildung einer Vertiefung, die sich über den Zahnkopf und/oder den Zahnfuß, beginnend von den Endflächen, erstreckt, die Zähne "weicher" eingestellt werden, sodass diese bei Belastung nachgiebiger ausgeführt sind. Durch diese Nachgiebigkeit können wiederum Kantenträger besser ausgeschlossen werden, sodass das Tragbild der Verzahnung insgesamt verbessert werden kann.

Es ist weiters gemäß einer Ausführungsvariante vorgesehen, dass der verdichtete Bereich zumindest im Bereich der Endfläche eine Dichte von mindestens 7,2 g/cm³ um das Tragbild zu verbessern.

Dabei kann der verdichtete Bereich zumindest im Bereich der Endfläche auch eine Dichte von mindestens 7,3 g/cm³ bzw. von mindestens 7,4 g/cm³ aufweisen.

Verdichtete Bereiche können ebenflächig mit der Endfläche ausgebildet sein. Es wird mit dieser Ausführungsvariante erreicht, dass über die verdichteten Bereiche, das heißt diese Formelemente, eine Verbesserung der mechanischen Festigkeit erreicht werden kann.

Weiters positiv auf das Tragbild wirkt sich gemäß einer Ausführungsvariante aus, wenn eine Kontur des Formelementes mit Rundungen zumindest im Bereich eines Richtungswechsel der Konturlinie des Formelementes versehen ist, also diese Formelemente im Bereich deren Auβenkontur keine scharfkantigen Übergänge aufweisen. Einerseits werden dabei Verbesserungen im Hinblick auf die Formgebung der Formelemente selbst erreicht, insbesondere auf die Entformung der Stempel des Presswerkzeuges, da damit eine geringere Gefahr besteht, dass Kantenbereiche der Formelemente abbrechen, andererseits haben sich derartige Ausgestaltungen der Erfindung im Betrieb des Stimzahnrades als vorteilhaft erwiesen.

Wie bereits erwähnt, ist es möglich, dass das Formelement eine Kontur aufweist, die zumindest annähernd der Kontur des Zahnes entspricht, sodass also der Zahn selbst wiederum im Bereich der Endflächen eine verbesserte mechanische Belastbarkeit bzw. eine bessere Verformbarkeit bei Belastung, je nach Ausgestaltung der Formelemente, aufweisen kann.

In einer Weiterbildung dieser Ausführungsvariante ist vorgesehen, dass das bzw. die Formelement(e) in axialer Richtung einen pilzförmigen Querschnitt aufweisen, wobei der "Pilzkopf" sich in radialer Richtung nach innen über den Fußkreis hinweg erstrecken kann, sodass also über die Zahnfußbereiche eine Verbesserung hinsichtlich der mechanischen Festigkeit und/oder der Beölung der Verzahnung erreicht werden kann.

Es ist aber auch möglich, dass in einfachen Ausführungsvarianten das bzw. die Formelement(e) annähernd einen in axialer Richtung betrachtet kreisförmigen oder ovalen Querschnitt aufweisen, wodurch die Presstempelgestaltung einfacher wird und damit das Verfahren zur Herstellung dieser Sinterzahnräder kostengünstiger durchgerührt werden kann.

Es ist weiters von Vorteil, wenn ein Übergang zwischen dem oder den Formelement(en) und der Endfläche abgeschrägt oder gerundet ausgeführt ist, sodass also auch in diesem Bereich keine scharfkantigen Übergänge zwischen Endfläche und Formelement vorhanden sind. Diese Ausführungsvariante der Erfindung hat sich im Betrieb der Stimzahnräder in einem Zahnradantrieb als vorteilhaft erwiesen. Zudem kann mit dieser Ausführungsvariante eine abrupte Eigenschaftsänderung vom Übergang der Formelemente in den Bereich der planflächig ausgebildeten Endflächen vermieden werden, sodass sich also je nach Anwendungsfall das Tragbild kontinuierlich oder entsprechend einer anderen Kurve verändern lässt, beispielsweise in Form einer Exponentialfunktion, etc.

Zum besseren Verständnis der Erfindung wird diese anhand der nachfolgenden Figuren näher erläutert.

Es zeigen jeweils in stark schematisch vereinfachter Darstellung:
- Fig. 1 bis 3: Einen Ausschnitt aus zwei miteinander kämmenden Zahnrädern in Seitenansicht, wobei an den Endflächen Formelemente als Erhebungen ausgebildet sind;
- Fig. 4: einen Ausschnitt aus zwei miteinander kämmenden, nicht erfmdungsgemäßen Zahnrädern;
- Fig. 5 und 6: Ausschnitte von zwei miteinander kämmenden Zahnrädern;
- Fig. 7 und 8: Ausschnitte von zwei miteinander kämmenden, nicht erfindungsgemäßen Zahnrädern;
- Fig. 9: einen Ausschnitt aus zwei miteinander kämmenden Zahnrädern im Bereich der Verzahnung in Seitenansicht mit negativ ausgeformten Formelementen;
- Fig. 10: einen Ausschnitt aus einer nicht erfindungsgemäßen Verzahnung mit unterschiedlicher Geometrie der Zähne,
- Fig. 11: ein Diagramm des Geräuschverhaltens eines erfindungsgemäßen Zahnrades im Vergleich zu einem herkömmlichen Zahnrad;
- Fig. 12: ein nicht erfindungsgemäßes mehrschichtiges Zahnrad;
- Fig. 13: einen Ausschnitt aus einer nicht erfindungsgemäßen Verzahnung eines Zahnrades in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfmdungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

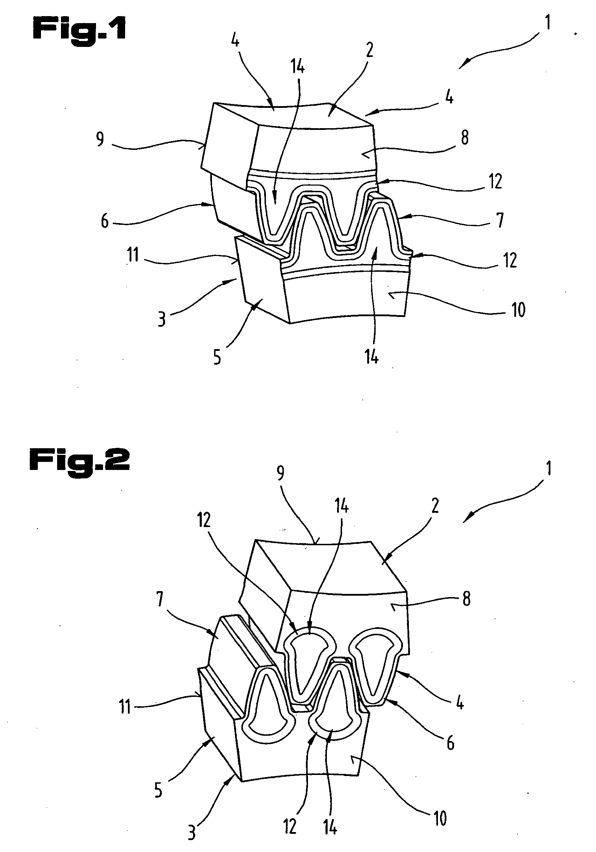

In den Fig. 1 bis 9 ist jeweils ein Ausschnitt aus einem Zahnradantrieb 1 von zwei miteinander kämmenden Zahnrädern 2, 3 in Schrägansicht dargestellt. Obwohl nicht dargestellt, kann der Zahnradantrieb 1 auch durch einen Umschlingungstrieb gebildet sein, beispielsweise einen Zahnriementrieb oder einen Kettentrieb. In diesem Fall sind naturgemäß normalerweise keine miteinander kämmenden Zahnräder 2, 3 vorgesehen.

Die Zahnräder 2, 3 sind als Stirnzahnräder ausgebildet und bestehen aus einem Sinterwerkstoff. Beispielsweise kann dieser Sinterwerkstoff durch einen Sinterstahl SK 7201 bzw. P-FL05M1 mod. gebildet sein. Dieser Sinterstahl ist lt. Norm vergütet auf 0,6 Gew.-% C. Die Norm basiert auf einem Basispulver mit 0,85 Gew.-% Mo.

Da die sintertechnische prinzipielle Herstellung derartiger Zahnräder 2, 3 aus dem Stand der Technik bekannt ist, diese also beispielsweise über den Verfahrensweg Pulvermischen, Pulverpressen, Sintern, Kalibrieren erhältlich sind, wobei gegebenenfalls Zwischensinterschritte und eine abschließende Nachbehandlung durch Härten etc. durchgeführt werden kann, sei hierzu auf die einschlägige Literatur verwiesen. Die jeweilige Temperaturführung sowie die weiteren Verfahrensparameter richten sich nach dem verwendeten Sinterwerkstoff.

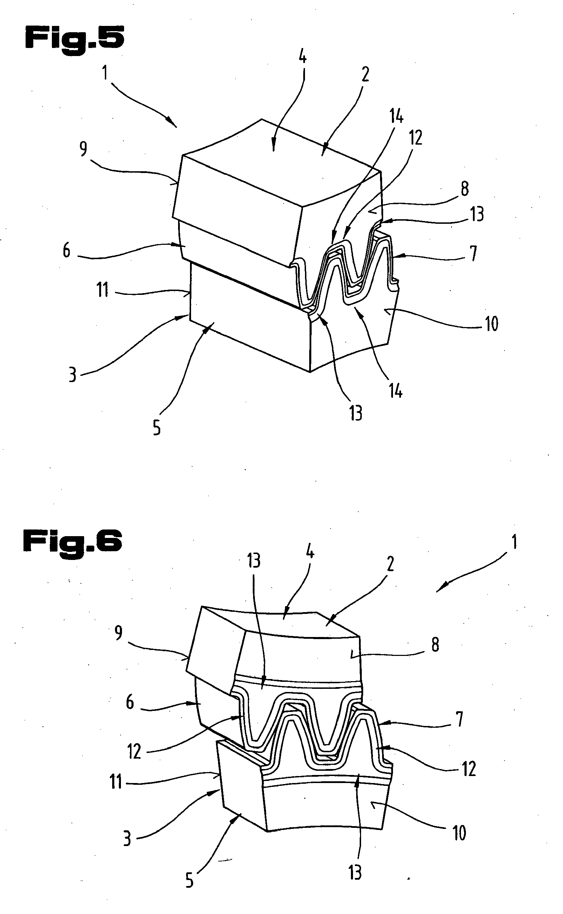

Die Zahnräder 2, 3 weisen jeweils einen Zahnradkörper 4, 5 auf, die an ihrem Umfang mit Zähnen 6, 7 zur Ausbildung der Verzahnungen versehen sind. Die Zahnradkörper 4, 5 weisen jeweils in axialer Richtung einander gegenüberliegende Endflächen 8, 9 bzw. 10, 11 auf. Auf zumindest einer dieser Endflächen 8 bis 11 von zumindest einem Zahnrad 2,3, vorzugsweise auf beiden Endflächen 8, 9 bzw. 10, 11 der beiden Zahnräder 2, 3, ist/sind (ein) Formelemente 12 angeordnet bzw. ausgebildet. Prinzipiell können diese Formelemente 12 negativ, neutral oder positiv ausgebildet sein, das heißt sie können in Form von Ausnehmungen 13 bzw. Vertiefungen, Erhebungen 14 oder planflächig mit den Endflächen 8 bis 11 als verdichtete Zonen bzw. Bereiche ausgebildet sein. Die Fig. 1 bis 3 zeigen dabei Ausführungsvarianten der Erfindung bei denen diese Formelemente 12 in Form von Erhebungen 14, die Fig. 5 und 6 zeigen Ausführungsvarianten der Erfindungen bei denen diese Formelemente 12 in Form von Ausnehmungen 13 vorhanden sind.

Prinzipiell stellen die in den Fig. 1 bis 3, 5, 6, und 9 dargestellten bevorzugten Ausführungsvarianten der Erfindung nur einige Möglichkeiten von Anordnungen von Formelementen 12 an Zahnrädern 2, 3 im Bereich der Endflächen 8 bis 11 dar und ist die Erfindung nicht auf die dargestellten Ausführungsvarianten der Formelemente 12 beschränkt. Es besteht nämlich auch die Möglichkeit anderer Formgestaltungen dieser Formelemente 12 bzw. können an ein und demselben Zahnrad 2, 3 mehrere unterschiedliche Formelemente 12 angeordnet werden, beispielsweise in Form unterschiedlich hoher Erhebungen 14 und/oder unterschiedlich vertiefter Ausnehmungen 13 und/oder unterschiedlicher Kontur und/oder in Form von Ausnehmungen 13 und Erhebungen 14. Es ist auch möglich, dass die Endflächen 8, 9 bzw. 10, 11 der Zahnräder 2, 3 unterschiedliche Formelemente 12 tragen, beispielsweise an den Endflächen 8 und 10 Formelemente 12 in Art von Ausnehmungen 13 und an den Endflächen 9, 11 Formelemente 12 in Form von Erhebungen 14 vorgesehen sind.

Daneben besteht, wie bereits erwähnt, die Möglichkeit, die Formelemente 12 in Form von verdichteten Bereichen auszubilden, wobei sich diese verdichteten Bereiche nicht zwingenderweise über die Endflächen 8 bis 11 erheben müssen bzw. vertieft ausgebildet sein müssen, sondern planflächig mit diesen Endflächen 8 bis 11 ausgebildet sein können. Die Gestalt dieser Formelemente 12 kann jenen der in den Fig. 1 bis 9 dargestellten folgen bzw. können diese Formelemente 12 auch jede andere beliebige Gestalt aufweisen.

Bei den Ausführungsvarianten nach den Fig. 1 bis 4 sind die Formelemente 12, wie bereits erwähnt, als Erhebungen 14 ausgebildet. So zeigt Fig. 1 eine Ausführungsvariante bei der das erhabene Formelement 12 einerseits die Form der Zähne 6, 7 nachformt und daran anschließend, das heißt unterhalb des Fußkreises der Verzahnung, ein zumindest annähernd wulstförmiger Steg, der sich entlang des gesamten Fußkreises erstrecken kann, ausgebildet ist. Im Bereich der Zahnköpfe, Zahnflanken und im Bereich des Fußkreises ist also bei dieser Ausführungsvariante eine Absetzung auf der Endfläche 8, 10 ausgebildet, das heißt dass in diesen Bereichen die Endfläche 8, 10 sichtbar ist.

Die Fig. 6 zeigt hinsichtlich der Kontur der Formelemente 12 eine dazu ähnliche Ausführungsvariante der Erfindung, wobei in diesem Fall die Formelemente 12 als Vertiefungen bzw. Ausnehmungen 13 mit derselben Kontur wie in Fig. 1 dargestellt ausgebildet sind. Auch bei dieser Ausführungsvariante ist also im Bereich der Zahnköpfe, der Zahnflanken und des Zahnfußes eine Absetzung vorhanden.

Bei der Ausführungsvariante nach Fig. 2 sind die Formelemente 12 in Draufsicht in axialer Richtung betrachtet zumindest annähernd pilzförmig ausgebildet, wobei wiederum die Kontur der Zähne 6, 7 zumindest annähernd durch die Formelemente 12 nachgebildet wird und unterhalb des Fußkreises eine Erweiterung ausgebildet ist, die pilzkopfförmig in Erscheinung tritt.

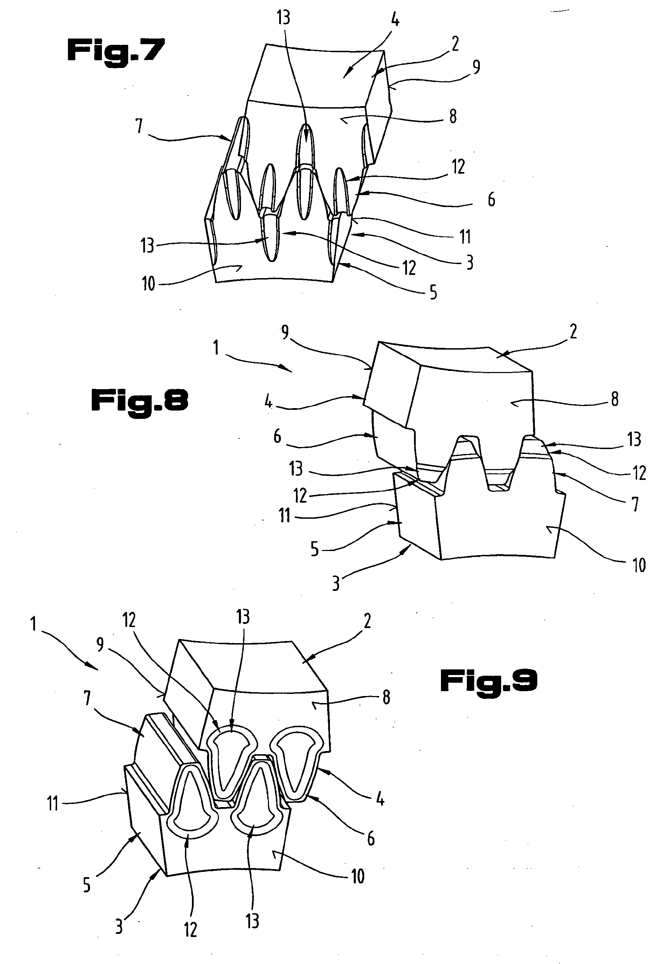

Die Fig. 9 zeigt dazu das entsprechende Pendant für die Formelemente 12 in Art von Ausnehmungen 13 bzw. Vertiefungen, die wiederum zumindest annähernd pilzförmig ausgebildet sind.

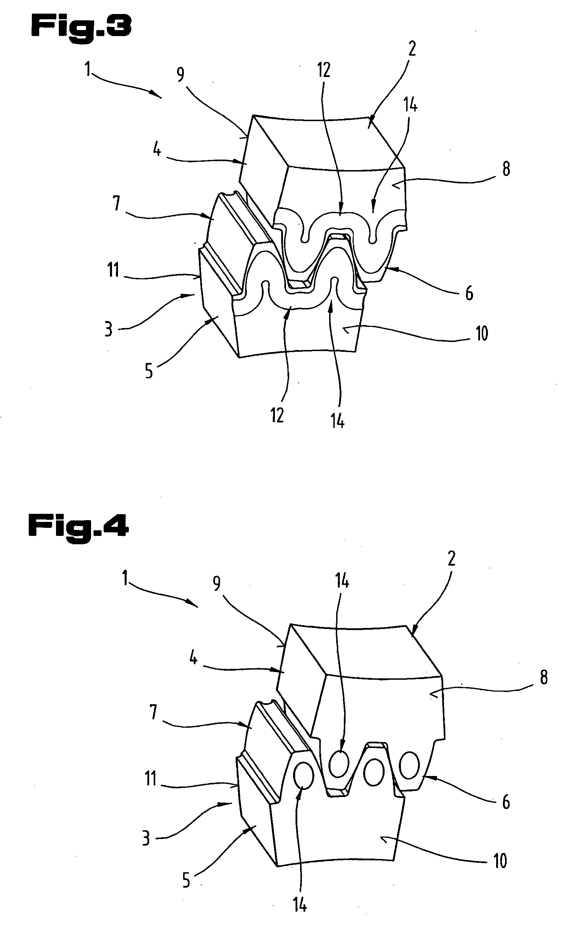

Auch bei der Ausführungsvariante nach Fig. 3 wird die Kontur der Zähne 6, 7 durch die Formelemente 12 zumindest annähernd nachgebildet, wobei diese Formelemente 12 als wulstförmige Erhebungen 14 über die Endflächen 8, 10 ausgeformt sind. Es können wie dargestellt im Zahnkopfbereich, das heißt unterhalb des Zahnkopfbereiches, diese Formelemente 12 mit einem größeren Querschnitt ausgebildet sein (in axialer Richtung in Draufsicht betrachtet). Auch bei dieser Ausführungsvariante erstrecken sich die Formelemente 12 entlang der gesamten Verzahnung der Zahnräder 2, 3.

Bei der Ausführungsvariante nach Fig. 4 sind die Formelemente 12 wiederum als Erhebungen 14 ausgebildet, allerdings mit zumindest annähernd kreisförmigem Querschnitt (in axialer Richtung in Draufsicht betrachtet), wobei sich diese Formelemente 12 im Bereich des Fußkreises und/oder der Zähne 2, 3 erstrecken können. Ein Durchmesser dieser Formelemente 12 beträgt dabei annähernd 50 % der Zahndicke in Umfangsrichtung, wobei sich die Formelemente 12 auch über die gesamte Zahnbreite in Umfangsrichtung erstrecken können.

Es sei an dieser Stelle erwähnt, dass im Rahmen der Erfindung generell möglich ist sowohl ein einziges Formelement 12 im Bereich zumindest einer der Endflächen 8 bis 11 anzuordnen, sodass also dieses Formelement 12 umlaufend über die gesamte Verzahnung ausgebildet ist, bzw. besteht auch die Möglichkeit diese Formelemente 12 in diskreten Bereichen anzuordnen. Auch Mischformen hiervon sind möglich, beispielsweise dass im Bereich der Zähne 6, 7 an den Endflächen 8, 10 diskrete Formelemente 12 angeordnet werden und im Bereich unterhalb des Fußkreises jeweils ein umlaufendes Formelement 12.

Die Ausführungsvariante nach Fig. 5 zeigt wiederum Formelemente 12 in Form von Ausnehmungen 13, die im Bereich der Zähne 6, 7 unterhalb der Außenkontur der Zahnräder 2, 3 ausgebildet sind, sodass also diese Formelemente 12 wiederum die Kontur der Verzahnungen nachformen.

Bei der Ausführungsvariante nach Fig. 7 sind die Formelemente 12 in Form von zumindest annähernd schlitzförmigen Vertiefungen bzw. Ausnehmungen 13 ausgebildet, wobei diese Ausnehmungen 13 beginnend beim Zahnkopfbereich radial nach innen verlaufend an den Endflächen 8,10 ausgebildet sind und können zusätzlich im Bereich der Zahnfüße derartig ausgeformte Formelemente 12 angeordnet werden. Dabei ist es möglich, dass eine Tiefe der Ausnehmungen 13 beginnend beim Zahnkopf bzw. Zahnfußkreis in radialer Richtung nach innen kleiner wird, sodass also die Formelemente 12 stetig bis in die Endflächen 8 bis 11 auslaufen wie es in Fig. 7 dargestellt ist. Eine maximale lichte Weite dieser Formelemente kann 80% der Zahnkopfbreite betragen.

In einer Abwandlung hierzu besteht die Möglichkeit, dass diese Formelemente 12 sich über die Zahnfüße bzw. die Zahnköpfe in axialer Richtung strecken, wobei in einer speziellen Ausführungsvariante hierzu dies so weit geführt werden kann, dass jeweils zwei einander gegenüberliegende Formelemente 12 an den Endflächen 8, 9 bzw. 10,11 damit miteinander verbunden werden.

Die Fig. 8 zeigt eine Ausführungsvariante bei der die Formelemente 12 wiederum als Ausnehmungen 13 bzw. Vertiefungen ausgeführt sind, wobei in diesem Fall die Zahnköpfe der Zähne 6, 7 gegenüber den restlichen Endflächen 8 bis 11 abgesetzt ausgeführt sind, und wobei zwischen den Formelementen 12 und den Endflächen 8 bis 11 ein rampenförmiger Übergang vorzugsweise ausgebildet ist, der in Form einer Schräge oder Rundung gebildet sein kann. Auch in diesem Fall ist es möglich, dass die Ausnehmungen 13, das heißt die Fonnelemente 12, sich wiederum über die Zahnköpfe in axialer Richtung erstrecken.

Generell sei angemerkt, dass eine Tiefe der Ausnehmung 13 vorzugsweise im Bereich zwischen 1 % und 20 % einer Breite der Zahnräder 2, 3 in axialer Richtung entspricht. Andererseits können die Formelemente 12 in Form von Erhebungen 14 eine Höhe gegenüber den Endflächen 8 bis 11 aufweisen, die im Bereich zwischen 1 % und 20 % der Breite der Zahnräder 6, 7 in axialer Richtung beträgt.

Es ist weiters möglich dass eine Tiefe der Ausnehmung 13 vorzugsweise im Bereich zwischen 2 % und 15 % einer Breite der Zahnräder 2, 3 in axialer Richtung entspricht. Andererseits können die Formelemente 12 in Form von Erhebungen 14 eine Höhe gegenüber den Endflächen 8 bis 11 aufweisen, die im Bereich zwischen 3 % und 16 % der Breite der Zahnräder 6, 7 in axialer Richtung beträgt.

Weiters ist es möglich, dass sich die Formelemente zumindest über 5 % des Flächenanteils der Zähne an der Endfläche erstrecken.

Des Weiteren ist es generell möglich, dass ein Übergang zwischen den Formelementen und den Endflächen 8 bis 11 scharfkantig oder vorzugsweise gerundet bzw. abgeschrägt ausgeführt ist. Ebenso kann ein Übergang zwischen einzelnen Formelementen derartig ausgebildet sein.

Weiters können nach einer Ausführungsvarianten die Formelemente 12 über ihren gesamten Verlauf eine unterschiedliche Höhe bzw. unterschiedliche Tiefe aufweisen, sodass sie also Formelementebereiche aufweisen die weiter über die Endfläche 8 bis 11 vorstehen die bzw. tiefer in die Endflächen 8 bis 11 eingeformt sind.

Im Fall der Formelemente 12 in Form von verdichteten Bereichen ist es bevorzugt, wenn diese verdichteten Bereiche zumindest im Bereich der Endfläche 8 bis 11 eine Dichte von mindestens 7,2 g/cm³, insbesondere eine Dichte von mindestens 7,3 g/cm³ aufweisen.

Für die Herstellung der Zahnräder 2, 3 insbesondere der Formelemente 12, wird die Formgebung vorzugsweise bereits während des Verpressens des Sinterpulvers vorgenommen. Es werden also Matrizen, das heißt Ober- und Unterstempel, verwendet, die die Herstellung der Ausnehmungen 13 entsprechende Erhebungen aufweisen bzw. für die

Herstellung der Erhebungen 14 entsprechende Ausnehmungen aufweisen. Für die Herstellung von verdichteten Formelementen besteht die Möglichkeit, dass diese nachträglich verpresst werden. Sollen diese verdichteten Bereiche plan mit den Endflächen 8 bis 11 abschließen, kann die Verpressung dieser verdichteten Bereiche entsprechend erfolgen. Dabei ist es auch möglich, dass in einem ersten Pressschritt die Erhebungen 14 gesondert gefertigt werden und in einem weiteren daran anschließenden Pressschritt diese Erhebungen 14 soweit verpresst werden, dass plane Endflächen 8 bis 11 entstehen. Die Formgebung der Formelemente 12 kann aber auch nach dem Sintern, beispielsweise während des Kalibrierens, erfolgen.

Durch die Ausbildung von negativen Formelementen 12 mit Vertiefungen bzw. Ausnehmunggen 13 kann das Tragbild der Zahnräder 2, 3 insofern verbessert werden, als die Randbereiche, beispielsweise bei den Ausführungen nach Fig. 1 oder 8, "weicher" sind als der Rest der Endflächen 8 bis 11, sodass sich also die Kanten besser verformen können bei mechanische Beanspruchung und damit Kantenträger besser vermieden werden können. Dieser Ausschluss der Kantenträger kann auch damit bewirkt werden, dass vor dem Sintern beispielsweise eine Balligkeit am Zahn erzeugt wird bzw. diese Balligkeit am Zahn beim Sintern erzeugt oder verstärkt wird, wodurch wiederum Kantenträger besser ausgeschlossen werden können. Insbesondere ist es auch von Vorteil, wenn im Bereich der 30°-Tangente eine Verstärkung im Fußkreisbereich ausgebildet wird, um entstehende Risse bei Beanspruchung der Zähne 6, 7 besser vermeiden zu können. Verdichtete Bereiche können auch damit hergestellt werden, dass positive Formen, also Formelemente 12 als Erhebungen 14, in einem an das Sintern anschließenden Kalibrierschritt verdichtet werden und damit die Endflächen 8 bis 11 als Planflächen hergestellt werden.

Neben den dargestellten Konturen bzw. Formen der Formelemente 12 können diese auch davon abweichende Formen aufweisen beispielsweise ovale, rechteckige, quadratische, dreieckige, polygonale etc. jeweils in axialer Richtung in Draufsicht betrachtet.

Es ist weiters möglich kombinierte Formelemente 12 an zumindest einer der Endflächen 8 bis 11 anzuordnen, also beispielsweise verdichtete Vertiefungen bzw. Ausnehmungen 13 oder verdichtete Erhebungen 14. Im letzteren Fall muss eine entsprechend höhere Menge an Sinterpulver während der Formgebung der Zahnräder 2, 3 zur Verfügung gestellt werden.

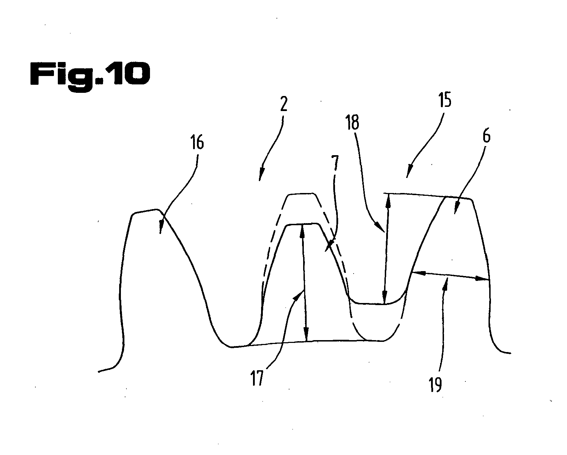

In Fig. 10 ist ein Ausschnitt aus einer Verzahnung 15 mit Zähnen 6, 7 und 16 dargestellt. Wie übertrieben dargestellt ist, ist die Verzahnung 15 ungleichförmig ausgebildet, wobei diese Geometrieabweichungen von der jeweils "idealen" Zahnform entweder einzeln oder in Kombination miteinander am Zahnrad 2 angeordnet sein können.

Bei der dargestellten Variante weist der Zahn 16 (linker Zahn) jene Form auf, die als Bezugsgröße für die anderen Zähne 6, 7 der Verzahnung 15 herangezogen wird. Es ist also die "Normform" die bei einem Zahnrad nach dem Stand der Technik für eine gewünschte Verzahnung hergestellt wird. Bei diesem Stand der Technik Zahnrad weisen die restlichen Zähne der Verzahnung ebenfalls diese Form auf.

Zumindest einzelne der restlichen Zähne 5, 6 der Verzahnung 15 können eine dazu abweichende Geometrie aufweisen. Beispielsweise weist der Zahn 7 (mittlerer Zahn) eine geringere Zahnhöhe 17, gemessen vom Zahnkopfende bis zur tiefsten Stelle der Zahnlücke zwischen dem Zahn 16 und dem Zahn 7, auf als der Zahn 16. Die dem Zahn 16 entsprechende Höhe des Zahnes 7 ist in Fig. 10 strichliert dargestellt. Der Zahn 6 weist wieder die gleiche Höhe auf wie der Zahn 16, allerdings ist eine Zahnlückentiefe 18 kleiner als die Zahnlückentiefe zwischen zwei gleichen Zähnen 16 (Normzahn). Mit anderen Worten weist das Zahnrad 2 mehrere Zahnfußkreise mit unterschiedlichem Durchmesser auf.

Neben diesen Geometrieänderungen kann auch eine Zahnbreite 19 variiert werden, wobei diese Variation sowohl hinsichtlich gleicher Zahnform größer oder kleiner sein kann, jeweils gemessen an der breitesten Stelle eines Zahnes 6, 7, 16, als auch bzgl. des Verlaufes über die Zahnflanken variiert werden kann, also unterschiedliche Zahnformen an sich die Verzahnung 15 bilden. (In Fig. 10 ist nur eine Zahnform gezeigt). Es sind also auch die Zahnflankensteilheiten der Zähne 6, 7, 16 variabel über die Verzahnung 15 gestaltbar.

Hinsichtlich der bevorzugten Bereiche der Variationen sei auf voranstehende Ausführungen verwiesen.

Es besteht weiters die Möglichkeit, die Teilung der Verzahnung 15 zu variieren, d.h. dass die Zähne 6, 7, 16 unterschiedlich weit voneinander beabstandet angeordnet sind.

Wie bereits erwähnt können diese Geomtrieabweichungen der Zähne 6, 7, 16 untereinander einzeln oder in Kombination von zwei oder mehr bzw. allen Möglichkeiten innerhalb eines Zahnrades 2 angewandt werden.

Daneben besteht die Möglichkeit, dass zusätzlich oder alternativ zu den Geometrievariationen Zähne 6, 7, 16 mit zueinander unterschiedlicher Härte in der Verzahnung 15 angeordnet werden, wobei bzgl. der Härtewerte auf voranstehende Ausführungen verwiesen sei.

Es wird also die Verzahnung 15 eines Zahnrades 2 bewusst "falsch" ausgeführt, also mit nicht gleichen Zähnen 6, 7, 16. Es müssen dabei nicht sämtliche Zähne 6, 7, 16 unterschiedlich sein, sondern können auch nur einzelne unterschiedlich zu den restlichen gleichen Zähnen sein. Die Auslegung kann in Abhängigkeit von der Gesamtgeometrie des Zahnrades bzw. von dessen Einsatzbereich gewählt werden,

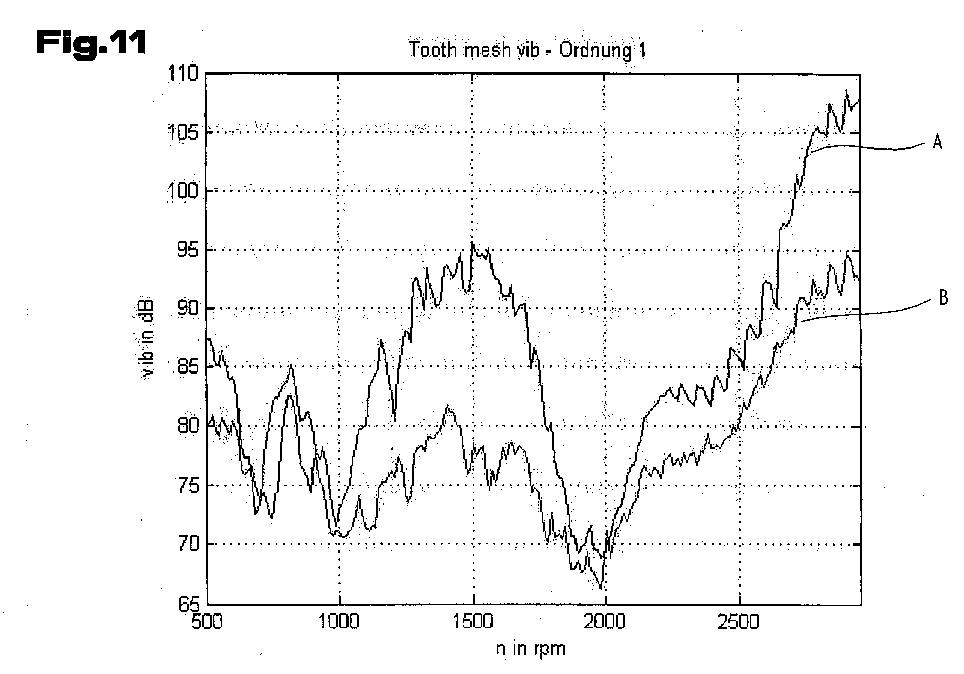

Fig. 11 zeigt ein Diagramm bzgl. des Geräuschverhaltens eines erfindungsgemäßen Zahnrades 2 in Abhängigkeit von der Drehzahl. Dabei zeigt die obere Kurve A das Geräuschverhalten eines Zahnrades nach dem Stand der Technik. Die untere Kurve B ist von einem Zahnrad 2 nach der Erfindung erstellt worden, welches mit Ausnahme der Verzahnung dem Zahnrad nach dem Stand der Technik entspricht. Hinsichtlich der Verzahnung wurde bei dem erfindungsgemäßen Zahnrad 2 die Zähne in radialer Richtung mit unterschiedlicher Höhe ausgefiihrt. Mit Ausnahme eines Bereiches der Drehzahl von 750 rpm bis ca. 1000 rpm zeigt das erfindungsgemäße Zahnrad 2 eine deutliche niedrigere Geräuschentwicklung als das Zahnrad nach dem Stand der Technik.

Von Vorteil ist, wenn die Ungenauigkeit der Verzahnung 15 keine Periodizität aufweist, also beispielsweise eine Abfolge hoch-tief der Zähne 6, 7, 16 nicht vorhanden ist, in der eine Schwingungsanregung stattfinden kann. Daher werden die Ungenauigkeiten bzw. die Geometrieabweichungen vorzugsweise aperiodisch bzw. nach dem Zufallsprinzip angeordnet, wobei jedoch darauf zu achten ist, dass keine Eingriffstörungen der Verzahnung 15 in eine weitere Verzahnung auftritt, also bei Vorhandensein mehrere Fuß- und/oder Kopfkreise diese aufeinander abgestimmt sind, beispielsweise diese mit üblichen, rechnergestützten Simulationsmethoden berechnet werden.

Die Zahnhöhen 17 können generell in Bereichen variiert werden, dass eine Profilüberdeckung von 1 möglichst nicht unterschritten wird.

Bei hohen Verzahnungen ist es möglich, dass ein Zahn zur Gänze ausgelassen wird, sodass also die Zahnhöhen 17 in diesem Fall um +/- 100 % der originalen Zahnhöhe 17 variieren kann. Insbesondere sollte dabei auch auf die Festigkeitsanforderungen des Zahnrades 2 Rücksicht genommen werden. Letzteres gilt auch für die Zahnfußtiefen.

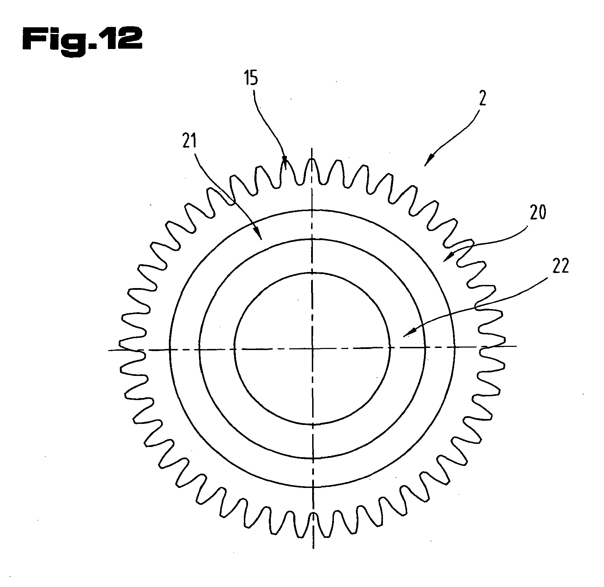

In Fig. 12 ist eine Ausführungsvariante eines mehrschichtigen Zahnrades 2 dargestellt. Dieses Zahnrand umfasst dabei eine äußere Randschicht 20 bzw. einen äußeren Ring, eine Mittelschicht 21 bzw. einen Mittelring, sowie eine innere Randschicht 22 bzw. einen inneren Ring, wobei die einzelnen Schichten in radialer Richtung übereinander angeordnet sind, sodass also die innere Randschicht zur Anlage an eine nicht dargestellte Welle gelangt und die äußere Randschicht die Verzahnung 15 aufweist. Die beiden Randschichten 20, 22 sind bevorzugt aus einem Sinterwerkstoff gebildet.

Es besteht die Mittelschicht 21 aus einem Kunststoff, insbesondere ausgewählt aus einem Duroplast. Prinzipiell ist es aber auch möglich, dass der Kunststoff ein Thermoplast oder ein Elastomer ist. Beispielsweise können Fluorkunststoffe verwendet werden.

Diese Mittelschicht weist eine Härte auf die kleiner ist als die Härte der beiden Randschichten 20, 22, sodass über diese Mittelschicht 21 eine Vibrationsdämpfung erfolgen kann.

Es besteht auch die Möglichkeit mehr als drei Schichten im Zahnrad 2 anzuordnen, beispielsweise vier, fünf oder mehr, wobei diese weiteren Schichten eine Härte aufweisen können die zwischen der Mittelschicht 21 und den beiden Randschichten 20, 22 liegt, um das Dämpfungsverhalten feiner abstufen zu können.

Die Schichten untereinander sind bevorzugt über eine Stoff- und/oder Formschluss miteinander verbunden, können aber auch miteinander verklebt sein.

Die Mittelschicht 21 weist insbesondere eine Schichtdicke aus voranstehend genanntem Bereich auf.

Es besteht die Möglichkeit eine Verzahnung 15 auszubilden, die "biegeweiche" Zähne 6, 7, 16 aufweist, wobei mit "biegeweich" eine Zahnsteifigkeit von maximal 20 N/(mm µm Radbreite), insbesondere maximal 10 N/(mm µm Radbreite), gemeint ist.

Zusätzlich zu diesen "biegeweichen" Zähnen 6, 7, 16 können diese auch relativ schlank und/oder hoch ausgebildet sein, wobei die Werte für die Zahnbreite 19 bzw. die Zahnhöhe 17 aus den voranstehend genannten Bereichen ausgewählt sein können.

Diese Variante eignet sich insbesondere bei Verzahnungen mit Umkehrspiel. Es kann damit der Eintrittsstoß verringert werden.

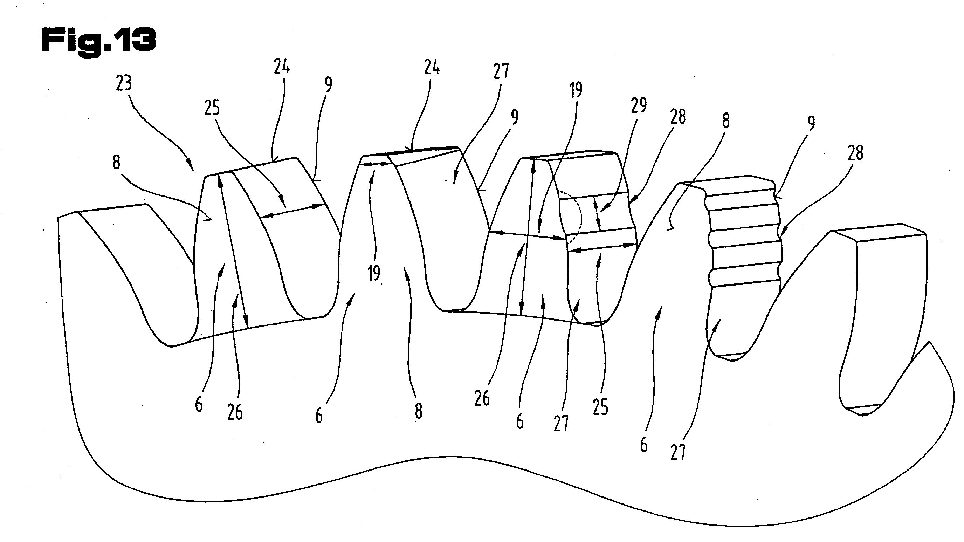

In Fig. 13 sind vier verschiedne Ausführungsvarianten von Zähnen 6 gemäß gezeigt. Es sei jedoch darauf hingewiesen, dass auch Mischvarianten der gezeigten bzw. beschriebenen Ausführungsvarianten möglich sind.

Der erste vollständig dargestellte Zahn 6 im linken Teil der Fig. 13 weist an einem Zahnkopf 23 an einer radial äußeren Stirnfläche 24 eine Kopfrücknahme auf, wodurch eine Konizität des Zahnkopfes 23 entsteht. Durch diese Konizität weist der Zahn 6 über ein Zahntiefe 25 von der Endfläche 8 ausgehend eine in Richtung auf die Endfläche 9, also in axialer Richtung, eine abnehmende Zahnhöhe 26, die Höhe eines Zahnes wird vom Fußkreis aus gemessen, in radialer Richtung auf. Die Abnahme der Zahnhöhe 26 kann dabei im Bereich zwischen 0 % und 100 %, insbesondere zwischen 10 % und 90 %, beispielsweise zwischen 12 % und 75 %, der maximalen Zahnhöhe dieses Zahnes 6 betragen.

Neben der dargestellten linearen Abnahme der Zahnhöhe 23 ist es auch möglich, dass diese nach einer anderen Funktion abnimmt, also beispielsweise mit einer Rundung versehen ist. Es ist also z.B. möglich, dass die Zahnhöhe 23 ausgehend von der Endfläche 8 in Richtung auf die Endfläche 9 vorerst stärker abnimmt und im Bereich der Endfläche 9 die Stirnfläche 24 flacher, d.h. mit geringerer Neigung ausläuft.

Daneben ist es auch möglich, dass zumindest einer der Übergänge von den Endflächen 8, 9 in die Stirnfläche 24 mit einer Abschrägung oder Rundung versehen ist.

Der in Fig. 13 an den ersten vollständig dargestellten linken Zahn 6 anschließende Zahn 6 weist ebenfalls eine Konizität auf, allerdings keine Konizität der Stirnfläche 24, wie soeben beschrieben, sondern eine Konizität im Übergangsbereich von der Stirnfläche 24 in eine daran anschließende Zahnflanke 27. Der Übergangsbereich ist dabei, wie Fig. 13 zeigt, zumindest annähernd dreieckförmig ausgebildet, kann jedoch auch eine andere Geometrie aufweisen. Die Zahnbreite 19 im Zahnkopfbereich variiert dadurch von der Endfläche 8 ausgehend in die Richtung auf die Endfläche 9, sodass also z.B. der Zahn 6 in diesem Bereich in der angegebenen Richtung breiter wird, bzw. in umgekehrter Richtung schmäler wird. Die Abnahme der Zahnbreite 19 kann zwischen 1 % und 10 %, insbesondere zwischen 2 % und 7 %, beispielsweise zwischen 3 % und 6 %, der maximalen Zahnbreite in derselben Ebene betragen.

Obwohl in Fig. 13 nur eine Konizität im Übergangsbereich Stirnfläche 24 - Zahnflanke 27 dargestellt ist, besteht selbstverständlich die Möglichkeit, dass auch die zweite Zahnflanke des Zahnes 6 mit einer derartigen Abnahme der Zahnbreite 19 versehen ist, wobei die beiden Abnahmen auch gegengleich verlaufen können.

Durch diese beiden Ausführungsvarianten wird eine Verringerung des sog. Eintrittsstoßes erreicht, wie dies bereits voranstehend beschrieben wurde.

Die in Fig. 13 an diesen, soeben beschriebenen Zahn 6 rechts anschließenden Zähne 6 weisen in zumindest einer der beiden Zahnflanken 27 zumindest eine Vertiefung 28 auf, wobei der rechte der beiden Zähne 6 drei Vertiefungen 28 und der links daran anschließende Zahn 6 nur eine Vertiefung 28 aufweist, die allerdings breiter ist.

Generell kann eine Breite 29 einer Vertiefung 28 zwischen 1 % und 20 %, insbesondere zwischen 2 % und 17 %, beispielsweise zwischen 7 % und 16 %, der Zahnhöhe 26 betragen. Eine Tiefe 30 einer Vertiefung 28 kann zwischen 1 % und 5 %, beispielsweise zwischen 2 % und 3 %, der maximalen Zahnbreite 19 des Zahnes betragen.

Es ist auch möglich eine von der dargestellten Anzahl der Vertiefungen 28 unterschiedliche Anzahl an Vertiefungen 28 in einer Zahnflanke 27 vorzusehen. Des Weiteren können die angeordneten Vertiefungen eines Zahnes 6 eine unterschiedliche Tiefe 30 und/oder Breite 29 aufweisen. Die Vertiefung(en) 28 müssen sich auch nicht über die gesamte Zahntiefe 25 in axialer Richtung erstrecken, wie dies in Fig. 13 strichliert dargestellt ist. Beispielsweise können sich die Vertiefungen 28 über einen Bereich in axialer Richtung erstrecken, der ausgewählt ist aus einem Bereich mit einer unteren Grenze von 2 % und einer oberen Grenze von 10 %, insbesondere zwischen 3 % und 8 %, beispielsweise zwischen 3 % und 6 %, der gesamten Zahntiefe 25 eines Zahnes 6 in axialer Richtung. Auch Kombinationen von sich von der Endfläche 8 bis in die Endfläche 9 sich durchgehend ersteckenden mit nicht durchgehenden Vertiefungen an einer oder beiden Zahnflanken 27 sind möglich. Es können weiters an beiden Zahnflanken derartige Vertiefungen 28 vorgesehen sein. Des Weiteren können zumindest einzelne der Vertiefungen 28 schräg zur axialen Richtung verlaufend angeordnet sein.

Von Vorteil ist die Anordnung derartiger Vertiefungen 28 für schnell laufende Zahnräder, d.h. Zahnräder mit Umfangsgeschwindigkeiten von über 15 m/s, und für die Ausbildung des Schmierfilmes bzw. zur Geräuschminimierung, wie dies voranstehend schon beschrieben wurde.

Es besteht die Möglichkeit, dass jeder Zahn 6 einer Verzahnung mit einer Ausführungsvariante entsprechend Fig. 13 versehen ist, ebenso kann nur jeder zweite, dritte, vierte, etc. Zahn 6 derart ausgebildet sein. Des weiteren besteht die Möglichkeit, dass Abfolge der Zähne 6, die mit derartigen "Unregelmäßigkeiten" der Gestalt versehen sind, nicht regelmäßig ist, also z.B. zwei nebeneinander liegende Zähne 6 eine derartige Gestaltsabweichung aufweisen, daran anschließend ein regelmäßiger Zahn 6 ausgebildet ist, daran nur einer oder drei Zähne 6 mit Gestaltsabweichungen anschließen, etc.

Die Ausführungsbeispiele zeigen mögliche Ausführungsvarianten des Zahnrades 2, 3, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Zahnrades 2, 3 dieses bzw. dessen Bestandteile teilweise unmaßstäblich und/oder vergrößert und/oder verkleinert dargestellt wurden.

### Bezugszeichenaufstellung

- 1: Zahnradantrieb
- 2: Zahnrad
- 3: Zahnrad
- 4: Zahnradkörper
- 5: Zahnradkörper

- 6: Zahn
- 7: Zahn
- 8: Endfläche
- 9: Endfläche
- 10: Endfläche

- 11: Endfläche
- 12: Formelement
- 13: Ausnehmung
- 14: Erhebung
- 15: Verzahnung

- 16: Zahn
- 17: Zahnhöhe
- 18: Zahnlückentiefe
- 19: Zahnbreite
- 20: Randschicht

- 21: Mittelschicht
- 22: Randschicht
- 23: Zahnkopf
- 24: Stirnfläche
- 25: Zahntiefe

- 26: Zahnhöhe
- 27: Zahnflanke
- 28: Vertiefung
- 29: Breite
- 30: Tiefe

## Patentansprüche

1. Stirnzahnrad mit einem Zahnradkörper (4, 5) aus einem Sinterwerkstoff, der einen Umfang aufweist, über den verteilt in radialer Richtung vorstehend Zähne (6, 7) angeordnet sind, und der in axialer Richtung von zwei Endflächen (8, 9, 10, 11) begrenzt ist, wobei auf zumindest einer Endfläche (8, 9, 10, 11) im Bereich der Zähne (6, 7) und/oder in radialer Richtung unterhalb der Zähne (6, 7) zumindest ein Formelement (12) in Form einer Ausnehmung (13) oder einer Erhebung (14) angeordnet ist, **dadurch gekennzeichnet, dass** das Formelement (12) oder die Formelemente (12) die Kontur der Verzahnung nachformen.

2. Stirnzahnrad nach Anspruch 1, **dadurch gekennzeichnet, dass** das zumindest eine Formelement (1) verdichtet ausgebildet ist.

3. Stirnzahnrad nach Anspruch 1 oder 2, **dadurch gekennzeichnet, dass** zusätzlich an zumindest einer der Endflächen (8, 9, 10, 11) zumindest ein Formelement (12) in Form eines verdichteten Bereichs angeordnet ist.

4. Stirnzahnrad nach Anspruch 1 einem der Ansprüche 1 bis 3, **dadurch gekennzeichnet, dass** sich das oder die Formelement(e) (12) in radialer Richtung maximal bis in einen Bereich unterhalb des Fußkreises der Zähne (6, 7) erstreckt/erstrecken von 35 % des maximalen Durchmessers des Zahnradkörpers (4, 5).

5. Stirnzahnrad nach Anspruch 1 einem der Ansprüche 1 bis 4, **dadurch gekennzeichnet, dass** sich das Formelement (12) entlang der Außenkontur der Endfläche (8, 9, 10, 11) erstreckt.

6. Stirnzahnrad nach einem der Ansprüche 1 bis 5, **dadurch gekennzeichnet, dass** das Formelement (12) sich zumindest über 5 % des Flächenanteils der Zähne (6, 7) an der Endfläche (8, 9, 10, 11) erstreckt.

7. Stirnzahnrad nach einem der Ansprüche 1 bis 6, **dadurch gekennzeichnet, dass** sich Formelemente (12) beginnend zumindest annähernd vom Zahnkopfkreis in radialer Richtung nach innen erstrecken.

8. Stirnzahnrad nach einem der Ansprüche 1 bis 7, **dadurch gekennzeichnet, dass** sich Formelemente (12) beginnend zumindest annähernd vom Zahnfußkreis in radialer Richtung nach innen erstrecken.

9. Stirnzahnrad nach Anspruch 7 oder 8, **dadurch gekennzeichnet, dass** die Formelemente (12) zusätzlich an den Zahnköpfen und/oder den Zahnfüßen sich in axialer Richtung erstreckend angeordnet sind.

10. Stirnzahnrad nach einem der Ansprüche 2 bis 9, **dadurch gekennzeichnet, dass** das oder die verdichtete(n) Formelement (12) zumindest im Bereich der Endfläche (8, 9, 10, 11) eine Dichte von mindestens 7,2 g/cm³ aufweist.

11. Stirnzahnrad nach einem der Ansprüche 3 bis 10, **dadurch gekennzeichnet, dass** der verdichtete Bereich ebenflächig mit der Endfläche (8, 9, 10, 11) ausgebildet ist.

12. Stirnzahnrad nach einem der Ansprüche 1 bis 11, **dadurch gekennzeichnet, dass** eine Kontur des Formelementes (12) mit Rundungen zumindest im Bereich eines Richtungswechsels der Konturlinie versehen ist.

13. Stirnzahnrad nach einem der Ansprüche 1 bis 12, **dadurch gekennzeichnet, dass** das bzw. die Formelement(e) (12) annähernd einen in axialer Richtung betrachtet pilzförmigen Querschnitt aufweist bzw. aufweisen.

14. Stirnzahnrad nach einem der Ansprüche 1 bis 12, **dadurch gekennzeichnet, dass** das bzw. die Formelement(e) (12) annähernd einen in axialer Richtung betrachtet kreisförmigen oder ovalen Querschnitt aufweisen.

15. Stirnzahnrad nach einem der Ansprüche 1 bis 13, **dadurch gekennzeichnet, dass** ein Übergang zwischen dem oder den Formelement(en) (12) und der Endfläche (8, 9, 10, 11) abgeschrägt oder gerundet ausgeführt ist.

16. Zahnradantrieb (1) mit zumindest zwei miteinander kämmenden Zahnrädern (6, 7) oder mit zumindest zwei Zahnrädern (6, 7) die über ein Zugmittel mit einander wirkverbunden sind, **dadurch gekennzeichnet, dass** zumindest eines der Zahnräder (6,7) entsprechenden einem der vorhergehenden Ansprüche ausgebildet ist.

## Claims

1. Spur gear wheel with a gear body (4, 5) made from a sintered material, having a circumference around which teeth (6, 7) projecting in the radial direction are distributed, and which is delimited in the axial direction by two end faces (8, 9, 10, 11), and at least one shaped element (12) in the form of a recess (13) or an elevation (14) is disposed on at least one end face (8, 9, 10, 11) in the region of the teeth (6, 7) and/or in the radial direction underneath the teeth (6, 7), **characterized in that** the shaped element (12) or the shaped elements (12) at least approximately imitate the contour of the toothing.

2. Spur gear wheel according to claim 1, **characterized in that** the at least one shaped element (1) is embodied to be compacted.

3. Spur gear wheel according to claim 1 or 2, **characterized in that** at least one shaped element (12) in the form of a compacted area is additionally disposed on at least one of the end faces (8, 9, 10, 11).

4. Spur gear wheel according to one of claims 1 to 3, **characterized in that** the shaped element(s) (12) extends/extend in the radial direction at most as far as a region underneath the root line of the teeth (6, 7) comprising 35 % of the maximum diameter of the gear body (4, 5).

5. Spur gear wheel according to one of claims 1 to 4, **characterized in that** the shaped element (12) extends along the external contour of the end face (8, 9, 10, 11).

6. Spur gear wheel according to one of claims 1 to 5, **characterized in that** the shaped element (12) extends at least across 5 % of the surface portion of the teeth (6, 7) on the end face (8, 9, 10, 11).

7. Spur gear wheel according to one of claims 1 to 6, **characterized in that** shaped elements (12) extend starting at least approximately from the tooth crest circle inwardly in the radial direction.

8. Spur gear wheel according to one of claims 1 to 7, **characterized in that** shaped elements (12) extend starting at least approximately from the tooth root line inwardly in the radial direction.

9. Spur gear wheel according to claim 7 or 8, **characterized in that** the shaped elements (12) are additionally disposed extending in the axial direction on the tooth crests and/or tooth roots.

10. Spur gear wheel according to one of claims 2 to 9, **characterized in that** the shaped element(s) (12) has/have a density of at least 7.2 g/cm³, at least in the region of the end face (8, 9, 10, 11).

11. Spur gear wheel according to one of claims 3 to 10, **characterized in that** the compacted area is in the same plane as the end face (8, 9, 10, 11).

12. Spur gear wheel according to one of claims 1 to 11, **characterized in that** a contour of the shaped element (12) is provided with rounded areas at least in the region of a change of direction in the contour line.

13. Spur gear wheel according to one of claims 1 to 12, **characterized in that** the shaped element(s) (12) has or have an approximately mushroom-shaped cross-section as viewed in the axial direction.

14. Spur gear wheel according to one of claims 1 to 12, **characterized in that** the shaped element(s) (12) have an approximately circular or oval cross-section as viewed in the axial direction.

15. Spur gear wheel according to one of claims 1 to 13, **characterized in that** a transition between the shaped element(s) (12) and the end face (8, 9, 10, 11) is of an angled or rounded design.

16. Gear drive (1) with at least two mutually meshing gears (6, 7) or with at least two gears (6, 7) which are actively connected to one another by a traction means, **characterized in that** at least one of the gears (6, 7) corresponds to one of the preceding claims.

## Revendications

1. Roue dentée frontale comprenant un corps de roue dentée (4, 5) constitué d'un matériau fritté qui présente une circonférence sur laquelle sont réparties des dents (6, 7) faisant saillie dans la direction radiale et qui est délimitée dans la direction axiale par deux surfaces d'extrémité (8, 9, 10, 11), étant entendu qu'au moins un élément de forme (12) ayant la forme d'un évidement (13) ou d'un rehaussement (14) est agencé sur au moins une surface d'extrémité (8, 9, 10, 11) dans la zone des dents (6, 7) et/ou en dessous des dents (6, 7) dans la direction radiale, **caractérisée en ce que** l'élément de forme (12) ou les éléments de forme (12) reproduisent le contour de la denture.

2. Roue dentée frontale selon la revendication 1, **caractérisée en ce que** l'au moins un élément de forme (1) est réalisé de façon comprimée.

3. Roue dentée frontale selon la revendication 1 ou 2, **caractérisée en ce qu'**en plus, au moins un élément de forme (12) ayant la forme d'une zone comprimée est agencé sur au moins une des surfaces d'extrémité (8, 9, 10, 11).

4. Roue dentée frontale selon l'une des revendications 1 à 3, **caractérisée en ce que** l'élément ou les éléments de forme (12) s'étend ou s'étendent dans la direction radiale au maximum jusqu'à une zone située en dessous du cercle de pied des dents (6, 7) de 35 % du diamètre maximal du corps de la roue dentée (4, 5).

5. Roue dentée frontale selon l'une des revendications 1 à 4, **caractérisée en ce que** l'élément de forme (12) s'étend le long du contour extérieur de la surface d'extrémité (8, 9, 10, 11).

6. Roue dentée frontale selon l'une des revendications 1 à 5, **caractérisée en ce que** l'élément de forme (12) s'étend au moins sur 5 % de la part de la surface des dents (6, 7) sur la surface d'extrémité (8, 9, 10, 11).

7. Roue dentée frontale selon l'une des revendications 1 à 6, **caractérisée en ce que** des éléments de forme (12) s'étendent vers l'intérieur dans la direction radiale en commençant au moins à proximité du cercle de sommet des dents.

8. Roue dentée frontale selon l'une des revendications 1 à 7, **caractérisée en ce que** des éléments de forme (12) s'étendent vers l'intérieur dans la direction radiale en commençant au moins à proximité du cercle de pied des dents.

9. Roue dentée frontale selon la revendication 7 ou 8, **caractérisée en ce que** les éléments de forme (12) sont en outre agencés aux sommets des dents et/ou aux pieds des dents en s'étendant dans la direction axiale.

10. Roue dentée frontale selon l'une des revendications 2 à 9, **caractérisée en ce que** l'élément ou les éléments de forme comprimés (12) présentent une densité d'au moins 7,2 g/cm³ au moins dans la zone de la surface d'extrémité (8, 9, 10, 11).

11. Roue dentée frontale selon l'une des revendications 3 à 10, **caractérisée en ce que** la zone comprimée est réalisée dans un seul plan avec la surface d'extrémité (8, 9, 10, 11).

12. Roue dentée frontale selon l'une des revendications 1 à 11, **caractérisée en ce qu'**un contour de l'élément de forme (12) est pourvu d'arrandis au moins dans la zone d'un changement de direction de la ligne de contour.

13. Roue dentée frontale selon l'une des revendications 1 à 12, **caractérisée en ce que** l'élément ou les éléments de forme (12) présente ou présentent approximativement une section, considérée dans la direction axiale, en forme de champignon.

14. Roue dentée frontale selon l'une des revendications 1 à 12, **caractérisée en ce que** l'élément ou les éléments de forme (12) présentent approximativement une section, considérée dans la direction axiale, de forme circulaire ou ovale.

15. Roue dentée frontale selon l'une des revendications 1 à 13, **caractérisée en ce qu'**une transition entre l'élément ou les éléments de forme (12) et la surface d'extrémité (8, 9, 10, 11) est réalisée dans une forme biseautée ou arrondie.

16. Commande à roues dentées (1) comprenant au moins deux roues dentées (6, 7) s'engageant l'une avec l'autre ou comprenant au moins deux roues dentées (6, 7) qui sont reliées de façon opérationnelle l'une avec l'autre par le biais d'un mécanisme de traction, **caractérisé en ce qu'**au moins une des roues dentées (6, 7) est réalisée conformément à l'une des revendications précédentes.
